# EUROPEAN PATENT APPLICATION

(11) **EP 4 775 009 A1**
(43) Date of publication of application: **15.07.2026**
(21) Application number: 25216173.2
(22) Date of filing: 17.11.2025
(51) Int. Cl.: A01C 7/10, A01C 7/12, A01C 7/08

(54) **AGRICULTURAL SYSTEM AND COMPUTER IMPLEMENTED METHOD FOR DETERMINING BLOCKAGE STATE OF A DISPENSER**

(30) Priority: 14.01.2025 US 202519020724
(71) Applicant: Deere & Company, Moline, IL 61265 (US)
(72) Inventor: BUSH, EAN M, 68163 Mannheim (DE); PETERSON, ANDREW J, 68163 Mannheim (DE); HARMON, ANDREW W, 68163 Mannheim (DE); QUAM, DALE A, 68163 Mannheim (DE); GRAHAM, WILLIAM D, 68163 Mannheim (DE); HINDMAN, RYLEY J, 68163 Mannheim (DE); SHATEK, LUKE A, 68163 Mannheim (DE)
(74) Representative: Reichert, Christian

(57) **Abstract**

An agricultural system (100) is disclosed. The agricultural system (100) comprising: a blockage state detector (226) configured to receive a first torque characteristic value indicative of torque applied by a first motor (194) to a first rotary dispenser (186) on an agricultural application machine (102) and compute a blockage state (280) corresponding to the first rotary dispenser (186) based on the first torque characteristic value; and a control signal generator (228) configured to generate a control signal (282) based on the blockage state (280). Furthermore, a computer implemented method comprising such agricultural system (100) is disclosed.

## Description

### FIELD OF THE DESCRIPTION

The present description relates to agricultural equipment. More specifically, the present description relates to a system that detects a characteristic indicative of torque to determine a blockage state of a dispenser on an agricultural machine.

### BACKGROUND

There are a wide variety of different types of agricultural equipment that can be used to plant seeds or apply other commodities to a field. Such equipment can include air seeders. Air seeders have an air cart with one or more central seed or commodity tanks. The seed or commodity in the tank is metered by a metering system or a dispensing system into common product delivery tubes called "primaries". The seed or commodity is delivered (using air delivery) to a tool for disbursement. The tool disburses the product into secondary tubes which deliver the product to individual furrows opened by the tool. The furrows are opened by a furrow opener and closed after seed is delivered to the furrow by a closer.

The discussion above is merely provided for general background information and is not intended to be used as an aid in determining the scope of the claimed subject matter.

### SUMMARY

Material is dispensed by a rotary dispenser into a delivery conduit from a tank and delivered to a tool on an agricultural machine. A sensor detects a torque characteristic indicative of torque applied to drive the rotary dispenser. A blockage state of the dispenser is generated based on the torque characteristic. The agricultural machine is controlled based on the blockage state.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial block diagram illustrating an agricultural system in which an air seeder is towed by a tractor.
FIG. 2 is a perspective view of an air cart.
FIG. 3 is a perspective view of metering devices (or dispensers) and primary delivery tubes.
FIG. 4 is a side cut-away view of a dispenser during normal dispensing.
FIG. 5 is a side cut-away view of a dispenser with a blockage upstream of the dispenser.
FIG. 6 is a side cut-away view of a dispenser with a blockage downstream of the dispenser.
FIGS. 7A and 7B (collectively referred to herein as FIG. 7) is a block diagram of one example of a portion of an agricultural system.
FIGS. 8, 9, and 10 are graphical illustrations of torque characteristics.
FIGS. 11A and 11B (collectively referred to herein as FIG. 11) shows a flow diagram illustrating one example of the operation of the agricultural system.
FIG. 12 is a flow diagram showing one example of a calibration system.
FIG. 13 is a block diagram of one example of an agricultural system, deployed in a remote server environment.
FIGS. 14, 15, and 16 show examples of mobile devices that can be used in the systems and architectures shown in other FIGS.
FIG. 17 is a block diagram of one example of a computing environment that can be used in the systems and architectures shown in other FIGS.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, air seeders have an air cart with one or more tanks that hold material to be delivered to the field. The air cart also has a metering system (also referred to as a dispensing system) corresponding to each tank. The metering system or dispensing system may include a rotary dispenser that is driven by a motor. An output shaft of the motor is coupled to the rotary dispenser either directly or through a transmission and drives rotation of the rotary dispenser. Rotation of the rotary dispenser dispenses material from the corresponding tank into a primary delivery tube and a fan blows air through that tube to move the material through the primary delivery tube to a seeding tool. The seeding tool receives material from the primary delivery tube and disperses the material into a plurality of secondary delivery tubes. Each secondary delivery tube delivers material to a particular furrow that is opened by a furrow opener on the tool. After the material is placed in the furrow, the furrow can be closed by a furrow closer on the tool.

Some current systems include a sensor that senses whether any material is passing through the delivery tubes. If material is not detected by the sensor, then the sensor generates a signal indicative of a blockage somewhere upstream of the sensor.

As discussed above, the air cart may have multiple different tanks carrying one or more different types of material. The tanks are spaced relative to one another along a longitudinal (front-to-back) axis of the air cart. Each tank often has a corresponding dispenser that dispenses the product from the tank into the primary delivery tubes. Therefore, there may be multiple different materials dispensed into each delivery tube. For instance, a first dispenser may dispense material from a first tank into a delivery tube and a second dispenser may dispense material from another tank into the same delivery tube. In such a configuration, even if one of the dispensers is blocked, there will still be material traveling through the delivery tube if the other dispenser is dispensing material into the delivery tube. Thus, a sensor that is configured to sense material traveling through the delivery tube will still sense material, even if one of the dispensers is blocked.

The present discussion thus proceeds with respect to a system that receives an input indicative of a torque characteristic where the torque characteristic is indicative of torque applied by a motor to drive a rotary dispenser. The torque characteristic is used to detect a blockage state corresponding to the dispenser. The blockage state may indicate that the dispenser is operating properly (e.g., no blockage exists), that there is a partial or total blockage upstream of the dispenser, that there is a partial or total blockage downstream of the dispenser, etc.

For instance, where the torque characteristic indicates that the applied torque is within a threshold range of a nominal torque characteristic, then this may indicate that the dispenser is operating normally. However, if the torque characteristic indicates that the applied torque is below the threshold range of the nominal torque characteristic, then this may indicate that there is a blockage upstream of the dispenser. The blockage may be a partial blockage or total blockage. If the torque characteristic indicates that the applied torque is above the threshold range of the nominal torque characteristic, this may indicate that there is a blockage downstream of the dispenser. Again, the blockage may be a total blockage or a partial blockage. Further, the torque characteristic may be analyzed to determine whether the rotary dispenser is exhibiting wear or is functioning in another undesirable way.

A control signal can be generated based upon the blockage state. The control signal can be used to control an operator interface mechanism to output an alert or other message to an operator. The alert or other message may identify the blockage state and the corresponding dispenser. The control signal can be used to generate a tutorial or diagnostic output indicating how to remedy the blockage state. The control signal can be used to control a communication system that communicates the blockage state and any other relevant information (such as the identity of the dispenser, the geographic location where the blockage existed, the commodity being dispensed by the blocked dispenser, or other information) to another machine or to another system. The control signal can be used to control the dispenser as well. For instance, if the blockage state indicates that the dispenser is partially blocked, then the control signal may be used to increase the volume of material that is being dispensed by the dispenser (e.g., to increase the rotary speed of the dispenser) so that the rate of material being applied by the dispenser more closely conforms to a desired application rate, even though the dispenser is partially blocked. These are examples of different control signals, but other control signals can be generated as well.

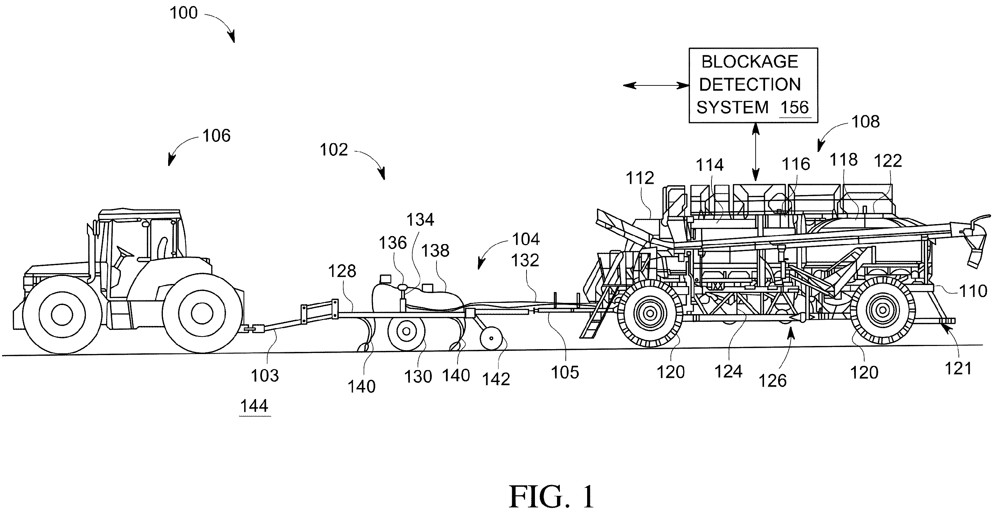

FIG. 1 is a side view of an example of an agricultural system 100 which includes an agricultural implement, in particular an air or pneumatic seeder 102. In the example shown in FIG. 1, the seeder 102 comprises a tilling implement (also referred to as a material application implement or drill or seeding tool) 104 towed between a tractor (or other towing vehicle) 106 and a commodity cart (also sometimes called an air cart) 108. The commodity cart 108 has a frame 110 upon which a series of product tanks 112, 114, 116, and 118, and wheels 120 are mounted. There may be one or more tanks, and four tanks are shown in FIG. 1 as an example only. Each product tank has a door (a representative door 122 is labeled) releasably sealing an opening at the upper end of the tank for filling the tank with product, most usually seed or a commodity of one type or another. A dispensing system 124 is provided at a lower end of each tank (a representative one of which is labeled in FIG. 1 and others are shown and described elsewhere herein) for controlled feeding or draining of product (most typically granular material) into a pneumatic distribution system or delivery system 126. The tanks 112, 114, 116, and 118 can hold, for example, a material or commodity such as seed or fertilizer to be distributed to the soil. The tanks can be hoppers, bins, boxes, containers, etc. The term "tank" shall be broadly construed herein. Furthermore, one tank with multiple compartments can also be provided instead of separate tanks.

The seeding tool 104 includes a frame 128 supported by ground engaging wheels 130. Frame 128 is connected to a leading portion of the commodity cart 108, for example by a tongue style attachment (not labeled). The commodity cart 108 as shown is sometimes called a "tow behind cart," meaning that the cart 108 follows the seeding tool 104. In an alternative arrangement, cart 108 can be configured as a "tow between cart," meaning the cart 108 is between the tractor 106 and seeding tool 104. In yet a further possible arrangement, the commodity cart 108 and seeding tool 104 can be combined to form a unified rather than separated configuration. These are just examples of additional possible configurations. Other configurations are even possible, and all configurations should be considered contemplated and within the scope of the present description.

In the example shown in FIG. 1, tractor 106 is coupled by couplings 103 to seeding tool 104 which is coupled by couplings 105 to commodity cart 108. The couplings 103 and 105 can be mechanical, hydraulic, pneumatic, and electrical couplings, and/or other couplings. The couplings 103 and 105 can include wired and wireless couplings as well.

The pneumatic distribution system 126 includes one or more fans or blowers located generally at 121 connected to a product delivery conduit structure having multiple product flow passages referred to as primary delivery tubes 132. The fan directs air through the primary delivery tubes 132. Each product dispensing system 124 controls delivery of product from its associated tank at a controllable rate to the transporting airstreams moving through primary delivery tubes 132. In this manner, each flow passage defined by each primary delivery tube 132 carries product from one or more of the tanks to a secondary distribution tower 134 on the seeding tool 104. There may be one tower 134 for each primary delivery tube 132. Each tower 134 includes a secondary distributing manifold 136, which may be located at the top of a vertical tube. The secondary distributing manifold 136 divides the flow of product into a number of secondary distribution tubes 138. Each secondary distribution tube 138 delivers product to one of a plurality of ground engaging tools 140 (also known as ground openers or furrow openers) that define the locations of work points on seeding tool 104. The ground engaging tools (or furrow openers) 140 open a furrow in the soil 144 and facilitate deposit of the product therein. The number of primary delivery tubes 132 that feed into secondary distribution may vary from one to eight or ten or more, depending at least upon the configuration of the commodity cart 108 and seeding tool 104. Depending upon the cart and implement, there may be two distribution manifolds 136 in the air stream between the dispensers 124 and the ground engaging tools 140. Alternatively, in some configurations, the product is metered or dispensed directly from the tank or tanks into secondary distribution lines that lead to the ground engaging tools 140 without any need for an intermediate distribution manifold. The product dispensing system 124 can be configured to vary the rate of delivery of seed or other material to each work point on seeding tool 104 or to different sets or zones or sections of work points on seeding tool 104. The configurations described herein are only examples. Other configurations are possible and should be considered contemplated and within the scope of the present description.

A firming or closing wheel 142 associated with each seeding tool 140 trails the tool and firms the soil over the product deposited in the soil. In practice, a variety of different types of tools 140 are used including, but not necessarily limited to, tines, shanks and disks. Tools 140 are typically moveable between a lowered position engaging the ground and a raised position riding above the ground. Each individual tool 140 may be configured to be raised by a separate actuator. Alternatively, multiple tools 140 (or sections of tools) may be mounted to a common component for movement together. In yet another alternative, the tools 140 may be fixed to the frame 128, the frame being configured to be raised and lowered with the tools 140.

Examples of air or pneumatic seeder 102 described above should not be considered limiting. The features described in the present description can be applied to any seeder configuration, or other material application machine or material application implement, whether specifically described herein or not.

FIG. 1 shows that agricultural system 100 can also include blockage detection system 156. In the example discussed herein, the dispensing systems 124 include rotary dispensers (described in greater detail below) that are driven by a drive motor. Blockage detection system 156 can receive inputs indicative of a torque characteristic which is, itself, indicative of a torque applied by each motor in driving a corresponding rotary dispenser in dispensing system 124. The torque characteristic can be processed by blockage detection system 156 to determine a blockage state corresponding to each rotary dispenser in dispensing system 124. The blockage state may indicate whether the corresponding rotary dispenser is operating normally, has a partial or full blockage upstream of the rotary dispenser (e.g., between an inlet end of the rotary dispenser and the tank that is feeding material to the rotary dispenser), or a partial or full blockage downstream of the rotary dispenser (a blockage downstream of the outlet end of the rotary dispenser). Control system 156 is described in greater detail elsewhere herein.

Also, it will be appreciated, that different portions of system 156 can reside on tractor 106, on tool or implement 104, on a remote system, and/or on air cart 108, or all of the elements of system 156 can be located at one place (e.g., on tractor 106). Elements of system 156 can be distributed to a remote server architecture or located or distributed in other ways as well.

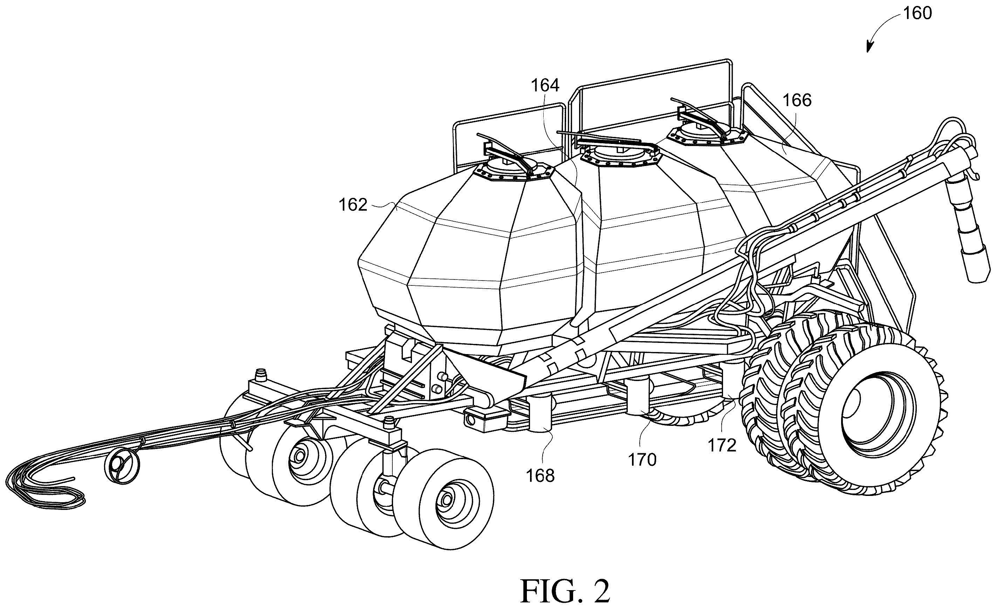

FIG. 2 is a pictorial illustration of another example of an air cart 160. Air cart 160 is similar to air cart 108, except that air cart 160 has three tanks 162, 164, and 166. Each tank has a corresponding dispensing system 168, 170, and 172 (each of which may include one or more rotary dispensers) that dispenses material from the corresponding tanks into one or more of the primary delivery tubes 132.

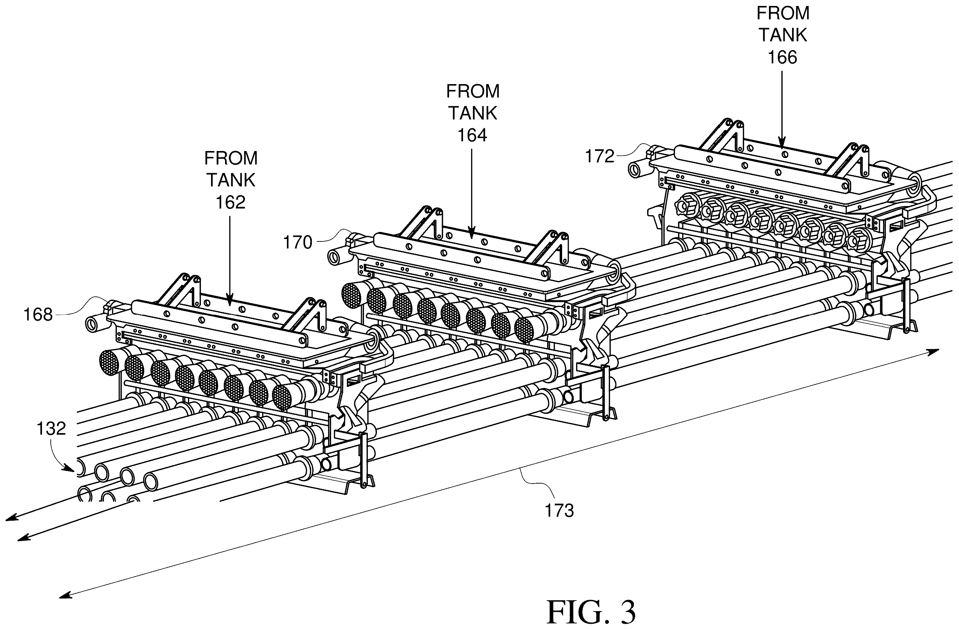

FIG. 3 shows a portion of air cart 160 with the tanks, wheels, and other portions removed, to show dispensing systems 168, 170, and 172 more clearly. FIG. 3 shows that material from tank 162 is dispensed by dispensing system 168 into one or more of the primary delivery tubes 132 (not shown in FIG. 3). Similarly, material from tank 164 is dispensed by dispensing system 170 into the primary delivery tubes 132, and material from tank 166 is dispensed by dispensing system 172 into the primary delivery tubes 132. Any number N of dispensing systems can dispense any number of different materials into the same primary delivery tube 132. Therefore, the primary delivery tubes 132 may carry a single type of material, or a plurality of different types of material. It will also be noted that the tanks and corresponding dispensing systems 168, 170, and 172 are spaced relative to one another along a longitudinal axis of air cart 160 that is generally parallel to line 173 in FIG. 3.

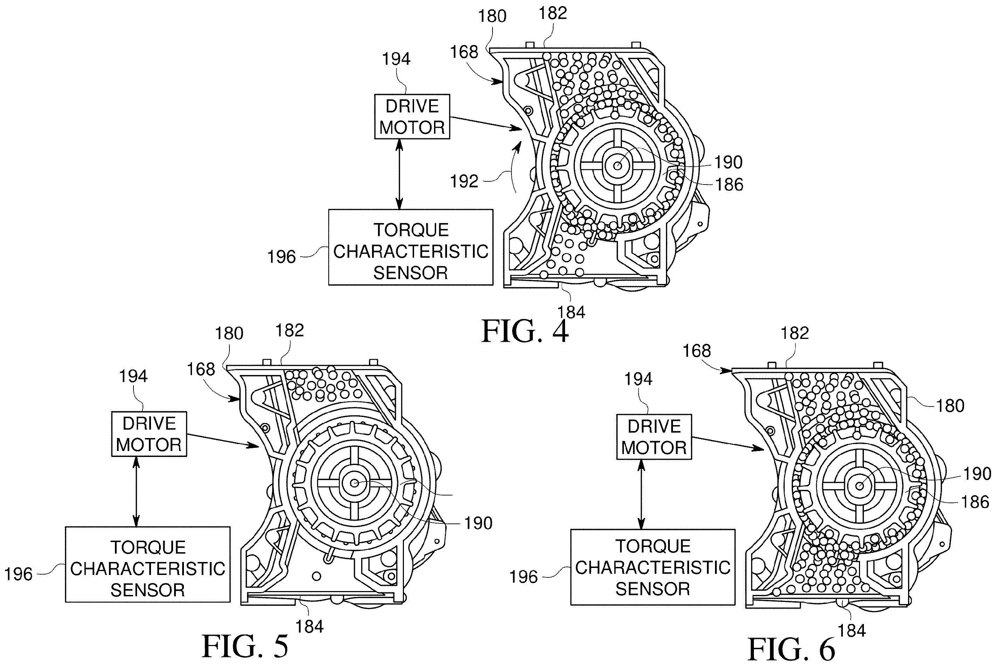

FIG. 4 is a side cutaway view of one example of dispensing system 168. Dispensing system 168 includes a housing 180 that defines an inlet end 182 at its upper end and an outlet end 184 at its lower end. A rotary dispenser 186 is disposed to receive material from tank 162 through the inlet and 182 and rotate about axis 190 in the direction indicated by arrow 192 to move the material from the inlet end 182 to the outlet and 184. Rotation of rotary dispenser 186 is driven by drive motor 194. Drive motor 194 may have an output drive shaft that is coupled directly to rotary dispenser 186 to drive rotation of rotary dispenser 186, or the output of drive motor 194 may be coupled to rotary dispenser 186 through a transmission.

Also, in the example shown in FIG. 4, a torque characteristic sensor 196 is configured to sense a torque characteristic indicative of the torque applied by the output of drive motor 194 in driving rotation of rotary dispenser 186 about axis 190. Torque characteristic sensor 196 may be a sensor along with a processor that calculates the torque based upon sensed power, current, voltage, etc. and generates an output indicative of the sensed torque. Torque characteristic sensor 196 may also be a power sensor, voltage sensor, current sensor, or other sensor that senses values corresponding to drive motor 194 that can be used to calculate the applied torque.

In another example, torque characteristic sensor 196 is a speed sensor which senses the speed of rotation of the output of drive motor 194.

In the example shown in FIG. 4, dispensing system 168 is operating normally, so the material being dispensed is not blocked either above the inlet and 182, or below the outlet and 184, of dispensing system 168. Therefore, torque characteristic sensor 196 generates an output of a torque characteristic which indicates that the torque applied by drive motor 194 is in a normal range. The normal range can be generated using a calibration process, or the normal range can be downloaded from a remote system or can be based on the torque applied by other drive motors on the machine 102, or set to a default range, or provided in other ways. However, if the torque characteristic generated by torque characteristic sensor 196 indicates that the applied torque is outside of the normal range, then this may be used to indicate a blockage. Further, where torque characteristic sensor 196 is sensing the speed of rotation of the output shaft of drive motor 194, then torque characteristic sensor 196, in the example shown in FIG. 4, generates an output signal indicating that the rotary speed of drive motor 194 is also within the nominal or normal range.

FIG. 5 is similar to FIG. 4, and similar items are similarly numbered. However, FIG. 5 shows that the material being dispensed by dispensing system 168 is completely blocked upstream of rotary dispenser 186, such as at the inlet and 182 of housing 180, so that no material is being moved by rotary dispenser 186. In that case, the torque applied by drive motor 194 to drive rotation of rotary dispenser 186 will be lower than normal, because rotary dispenser 186 does not need to move any material, as there is a total blockage upstream of rotary dispenser 186. Therefore, in one example, the torque characteristic sensor 196 generates an output in FIG. 5 indicating that the applied torque is outside (and below) the normal range. In one example, the torque characteristic may be in a partial blockage range which corresponds to the dispensing system 168 being partially blocked upstream of rotary dispenser 186. For example, if some material is being moved by rotary dispenser 186, then the torque applied by drive motor 194 may be below the normal range, but only slightly below the normal range indicating a partial blockage. If the applied torque is below the partial blockage range, then this may indicate that the applied torque is so low that there is likely a full blockage upstream of rotary dispenser 186. The partial blockage range may be set empirically, it may be set during a calibration process or be based on the torque characteristic values corresponding to other rotary dispensers on machine 102, the partial blockage range may be set to a default range corresponding to the product being applied, or the range may be set in other ways. Further, where torque characteristic sensor 196 is sensing the speed of rotation of the output shaft of drive motor 194, then torque characteristic sensor 196, in the example shown in FIG. 5, may generate an output signal indicating that the rotary speed of drive motor 194 is above, or has momentarily spiked above, the nominal or normal range.

FIG. 6 is similar to FIG. 5 and similar items are similarly numbered. However, FIG. 6 shows that there is a complete blockage downstream of rotary dispenser 186, proximate the outlet end 184 of housing 180. Where there is a blockage downstream of rotary dispenser 186, torque characteristic sensor 196 generates an output of a torque characteristic indicating that the torque applied by drive motor 198 is above the normal range because rotary dispenser 186 is attempting to push more material though the blockage. If the applied torque is above the normal range only slightly, the applied torque may be within a partial blockage range indicating that there is a partial blockage downstream of rotary dispenser 186. If the applied torque is above the partial blockage range, this may indicate that there is a full or total blockage downstream of rotary dispenser 186. Further, where torque characteristic sensor 196 is sensing the speed of rotation of the output shaft of drive motor 194, then torque characteristic sensor 196, in the example shown in FIG. 6, may generate an output signal indicating that the rotary speed of drive motor 194 is below, or has momentarily and abruptly dropped below, the nominal or normal range. Thus, the output of torque characteristic sensor 196 can be processed by blockage detection system 156, for each rotary dispenser being used, to identify a blockage state corresponding to each rotary dispenser.

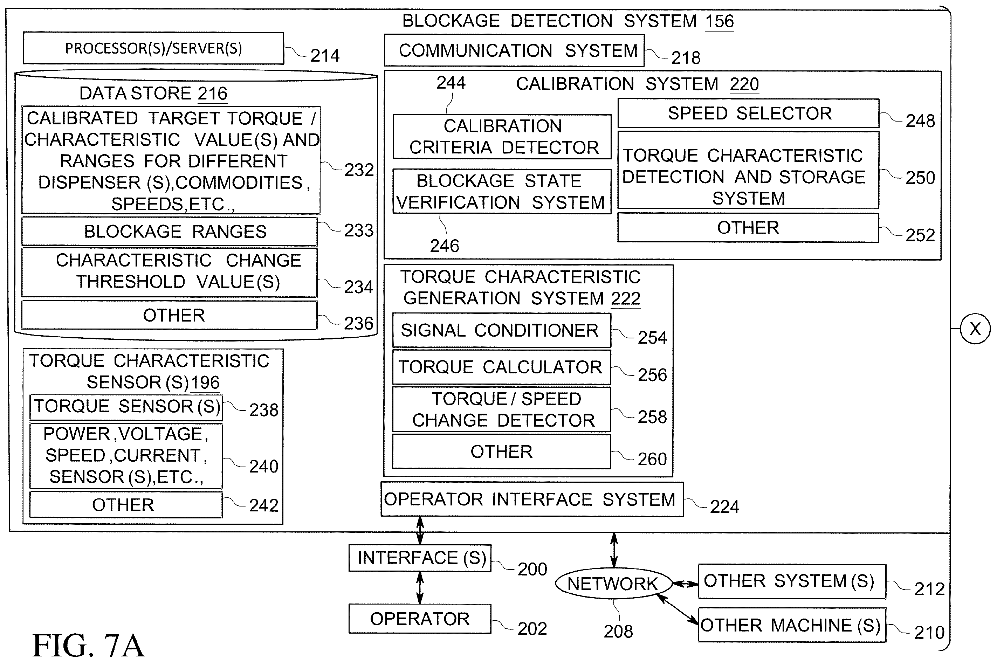

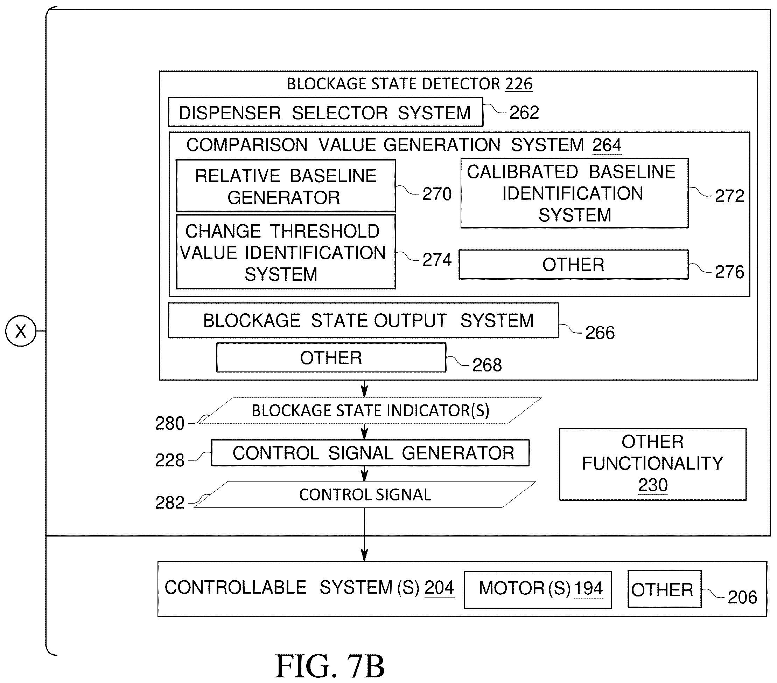

FIGS. 7A and 7B (collectively referred to herein as FIG. 7) illustrate a block diagram showing some portions of the agricultural system 100 in more detail. The items in FIG. 7 that are similar to those shown in previous FIGS. are similarly numbered. In the example shown in FIG. 7, blockage detection system 156 can generate interfaces 200 for interaction by an operator 202. Operator 202 may be located in an operator compartment of towing vehicle 106, or elsewhere. Operator 202 can interact with interfaces 200 to control and manipulate portions of blockage detection system 156 and portions of agricultural system 100.

FIG. 7 also shows that blockage detection system 156 can generate control signals to control controllable subsystems 204. Controllable subsystems 204 can include the drive motors 194 and any of a wide variety of other controllable subsystems 206. Further, FIG. 7 shows that blockage detection system 156 can communicate over network 208 with other machines 210 and/or other systems 212. Network 208 can be a local area network, a wide area network, a near field communication network, a Bluetooth or Wi-Fi network, a cellular network, or any of wide variety of other networks or combinations of networks. Other systems 212 can include farm manager systems, vendor systems, maintenance systems, and/or any of wide variety of other computer systems. Other machines 210 can include towing vehicle 106, other vehicles operating in the same field as vehicle 106, tender vehicles, and/or any of wide variety of other vehicles.

In the example shown in FIG. 7, blockage detection system 156 includes one or more processors or servers 214, data store 216, torque characteristic sensors 196, communication system 218, calibration system 220, torque characteristic generation system 222, user interface system 224, blockage state detector 226, control signal generator 228, and any of a wide variety of other functionality 230. Data store 216 can include calibrated target torque/characteristic values for different dispensers, different commodities, different dispenser speeds, etc., indicated by block 232. Data store 216 can also include blockage ranges 233, characteristic change threshold values 234, and any of wide variety of other information 236. Torque characteristic sensors 196 can include one or more torque sensors 238, one or more power, voltage, speed, current, or other sensors 240, and/or any of wide variety of other sensors 242. Calibration system 220 can include calibration criteria detector 244, blockage state verification system 246, speed detector 248, torque characteristic detection and storage system 250, and/or any of wide variety of other items 252. Torque characteristic generation system 222 includes signal conditioner 254, torque calculator 256, torque change detector 258, and/or any of wide variety of other items 260. Blockage state detector 226 includes dispenser selection system 262, comparison value generation system 264, blockage state output system 266, and/or any of wide variety of other items 268. Comparison value generation system 264 can include relative baseline generator 270, calibrated baseline identification system 272, change threshold value identification system 274, and/or other items 276. Before describing the operation of blockage detection system 156 in more detail, a description of some of the items in blockage detection system 156, and their operation, will first be provided.

Again, it will be appreciated that, while the items in blockage detection system 156 are shown in block diagram form in FIG. 7, those items can be all located on a single machine, or distributed among a plurality of different machines, and/or distributed across the machines and a remote server environment such as in a cloud computing system.

Calibrated target torque/characteristic values 232 can be nominal or normal torque values and ranges that indicate that the dispensers 168 are operating normally, without a blockage. It will be appreciated that the target torque/characteristic values may be different for different types of dispensers, for different commodities, for different dispenser speeds or application rates, for different commodity characteristics (such as commodity moisture, density, etc) for different atmospheric conditions (e.g., humidity, etc.). Therefore, the target torque/characteristic values can be stored as values 232 and indexed based on the type of dispenser, the type of commodity, the dispenser speed or application rate, and/or based on a wide variety of other information. The relevant target torque/characteristic values can be accessed using the index values.

Blockage ranges 232 may define the ranges around the target torque/characteristic values that are considered nominal. For instance, if the sensed torque or torque characteristic varies within the nominal range of the target torque/characteristic value, this may still be considered normal (no blockage) operation. Such a normal range may be defined by blockage ranges 232. In addition, blockage ranges 232 may identify ranges of values above and/or below the normal ranges for the target torque/characteristic values that correspond to the different blockage states. For instance, a first blockage range that is higher than the normal range for the target torque/characteristic value may identify that the corresponding dispenser has a partial blockage downstream of the dispenser. A blockage range that is below the normal range for the target torque/characteristic value may identify that there is a partial blockage upstream of the dispenser. Other blockage ranges 232 can be defined as well.

Characteristic change threshold values 234 identify threshold values for the magnitude and/or rate of change of the detected torque/characteristic value where that magnitude and/or rate of change may correspond to a blockage state. For instance, if the detected torque or characteristic value suddenly increases by a threshold amount, this may identify a blockage downstream of the dispenser, while if the torque or characteristic value suddenly decreases by a threshold amount, this may indicate a blockage upstream of the dispenser. Similarly, where the speed of the rotary dispenser is detected, a sudden change in speed may identify a blockage state as well. A sudden increase in speed may identify a blockage upstream of the dispenser while a sudden decrease in speed may identify a blockage downstream of the dispenser. Characteristic change threshold values 234 thus identify threshold values for changes in the torque or characteristic value that can be used to identify blockage states.

Torque sensors 238 may be measurement flanges or measurement shafts or other torque sensors or torque transducers that generate an output signal indicative of detected or measured torque. Power, voltage, speed, current, and other sensors 240 may sense variables indicative of power, voltage, speed, current, etc. and generate an output signal indicative of the sensed variable.

Communication system 218 enables communication of the items in agricultural system 100 with one another. Therefore, communication system 218 may be a controller area network (CAN) bus and bus controller, a wide area network communication system, a local area network communication system, a cellular communication system, a Wi-Fi or Bluetooth communication system, a near field communication system, or other communication systems. Further, communication system 218 may enable communication over network 208 with other systems 212, other machines 210, etc. Therefore, communication system 218 may vary depending on the type of network 208 over which system 218 is to communicate.

Operator interface system 224 can include any of a wide variety of operator interface mechanisms and corresponding logic used to control those mechanisms. For instance, operator interface system 224 can include a steering wheel, joysticks, levers, linkages, a microphone and speakers (e.g., where speech recognition and/or speech synthesis is provided), a display screen, a touch sensitive display screen, or other items. Where a display screen is used, user actuatable input mechanisms can be displayed to display user information and receive user inputs. Those mechanisms can include such things as icons, links, buttons, etc. The mechanisms can be actuated using point and click device, touch gestures, etc. Operator interface system 224 can include any of a wide variety of other audio, visual, and/or haptic output/input devices.

Calibration system 220 can be used to generate the target torque/characteristic values 232 in data store 216 based on a calibration operation. Calibration criteria detector 244 detects calibration criteria indicating when a calibration operation is to be performed. For instance, if the configuration of the dispensers has changed, or if the make or model of the dispensers has changed since the last calibration operation, this may indicate that a new calibration operation should be performed. Similarly, if the air cart or other dispensing system is dispensing a new commodity for which no calibration has been performed, then this may indicate that a calibration operation is to be performed as well. Calibration criteria detector 244 thus detects such criteria and generates an output indicating when a calibration operation is to be performed. It will be noted that calibration can be performed when machine 102 is not in the field and the calibrated values 232 can be stored for later use. In another example, calibration is performed during operation in the field or at other times.

A dispenser can be selected for calibration and speed selector 248 then selects a rotary speed for the dispenser being calibrated. In one example, each dispenser may be calibrated at a plurality of different speeds. Therefore, speed selector 248 selects those speeds during the calibration operation.

Blockage state verification system 246 then verifies the blockage state (e.g., that there is no blockage, and the dispenser is operating normally, that there is a full blockage, a partial blockage, etc.). Blockage state verification system 246 can include an operator input mechanism that allows an operator to input an observed value, or another type of verification system. Torque characteristic detection and storage system 250 then detects the torque/characteristic values 232 and stores those values to indicate the normal torque/characteristic values corresponding to when the dispenser is operating normally, at the selected speed. System 250 may also generate the normal range as well as torque/characteristic values corresponding to other blockage states and ranges.

Torque characteristic generation system 222 receives signals from sensors 196 and generates the torque value or characteristic value detected during the dispensing operation. Signal conditioner 254 performs signal conditioning operations on the sensor signals, such as amplification, normalization, aggregation, filtering, etc. Torque calculator 256 can receive a plurality of different sensor signals and calculate a torque value or torque characteristic value based upon those inputs. For instance, when torque calculator 256 receives signals from a power sensor, voltage sensor, current sensor, etc. 240, torque calculator 256 can calculate a torque value or torque characteristic value based upon those sensor signals. Further, signal conditioner 254 and torque calculator 256 can perform other computations to obtain other torque characteristics. For instance, the standard deviation of a torque characteristic value can be calculated and used by comparison value generation system 264 to identify a blockage state. Torque/speed change detector 258 detects a variation or change in the detected torque or torque characteristic or motor speed. For instance, torque/speed change detector 258 can measure how much two consecutive samples of the sensor signal have changed, and calculate a change value based upon the magnitude of change and the sampling time to identify not only how much the detected value has changed, but how quickly it has changed.

The torque value or torque characteristic value is output from system 222 to blockage state detector 226 which detects and outputs a blockage state indicator 280 corresponding to the dispenser under analysis. The spot blockage state indicator 280 indicates whether the dispenser is operating normally and is not blocked, has a partial block upstream or downstream of the dispenser, and/or has a full blockage upstream or downstream of the dispenser. A blockage state indicator 280 may be output for each dispenser being monitored and may include a wide variety of other information as well.

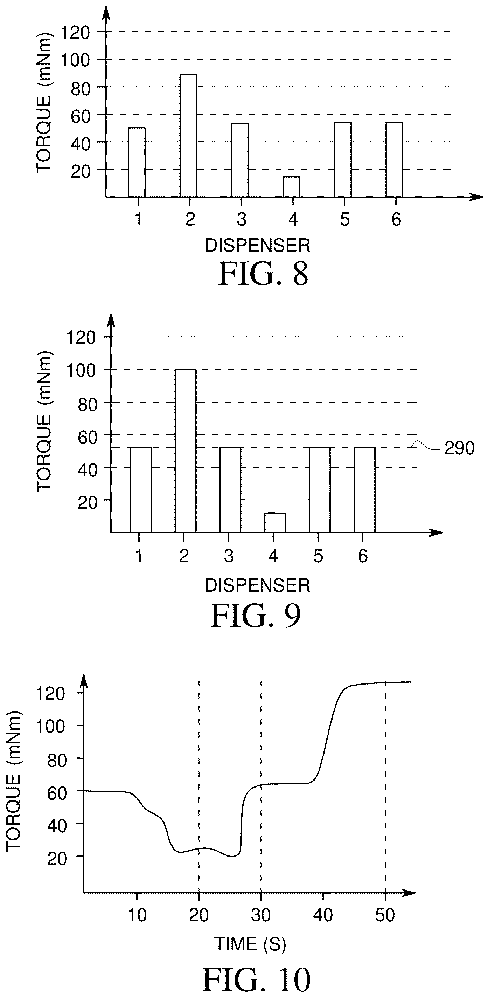

Therefore, dispenser selection system 262 selects a dispenser for which a blockage state is to be determined. Comparison value generation system 264 can process the torque value or torque characteristic value output by system 222 to determine the blockage state. Relative baseline generator 270 establishes a baseline or normal torque value or torque characteristic value based upon the detected torque or torque characteristic generated by the other dispensers, other than the dispenser under analysis or by a subset of those other dispensers. For instance, relative baseline generator 270 may receive the detected torque value or torque characteristic value corresponding to dispensers on either side of the dispenser under analysis or corresponding to a different set of dispensers and aggregate those torque values or torque characteristic values, such as by averaging them. The torque value or torque characteristic value output by system 222 for the dispenser under analysis may then be compared to the averaged torque value or torque characteristic value to identify a blockage state. FIG. 8 shows a graphical example of this which plots torque versus dispenser. In other examples, additional processing can also be performed. For example, the standard deviation in the torque characteristic value for the dispenser under analysis can be compared to the standard deviations in the torque characteristic values corresponding to a set of dispensers. Other torque characteristic values can be computed and used as well.

Assume that dispenser number two in FIG. 8 is being analyzed. Relative baseline generator 270 can compare the torque value of dispenser two against the average torque value of the other dispensers that are within a threshold value of one another. For instance, dispensers one, three, five, and six all have a torque value that varies closely relative to one another. The average of those values can be compared against the torque value on dispenser two to identify a blockage state. It can be seen in FIG. 8 that the torque value sensed from dispenser two is much higher than the average torque values of the other dispensers one, three, five, and six. Thus, the high torque value detected on dispenser two may indicate a partial or total blockage downstream of the dispenser. The torque value for dispenser four can also be compared against the other dispensers to determine that there is likely a full or partial blockage upstream of dispenser four. The torque values for the other dispensers are close relative to one another and therefore may be identified as operating normally.

In this way, the torque or characteristic value for the dispenser under analysis is being processed relative to the torque or characteristic values for the other dispensers on the machine and the target torque value or target torque characteristic value is being established, dynamically, during run time, by the other dispensers. This may accommodate scenarios where the normal torque value may vary based upon weather conditions, based upon whether the air cart is going uphill or downhill, etc. The normal value will be established based upon the detected torque value or torque characteristic value for the other dispensers on the same machine (or a subset of those dispensers), thus dynamically accommodating for changes in conditions which may affect the normal torque value or torque characteristic value.

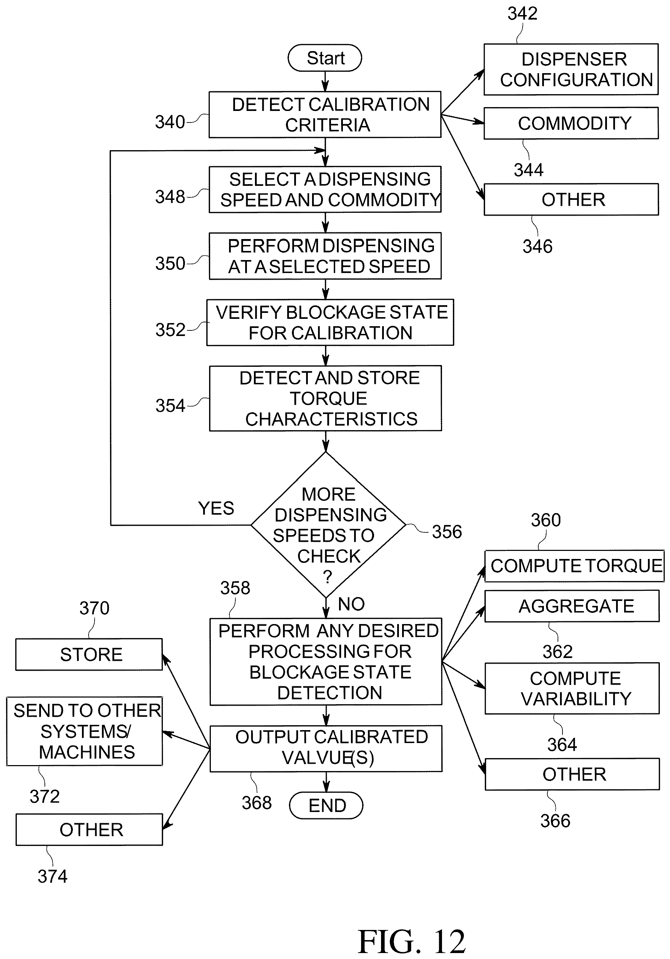

Calibrated baseline identification system 272 retrieves the relevant calibrated target torque/characteristic values 232 that were generated during a calibration operation and compares the torque or characteristic value detected for the dispenser under analysis to the relevant target torque/characteristic value 232 to identify a blockage state for the dispenser under analysis. One example of a calibration operation is discussed in more detail below with respect to FIG. 12. FIG. 9 shows a graph illustrating a calibrated torque/torque characteristic value. In FIG. 9, a calibrated torque value is represented by the dashed line 290. The calibrated value 290 may be an averaged value, a standard deviation value, or another calibrated value. The detected torque value or torque characteristic value corresponding to the dispenser under analysis is then compared against that calibrated value 290 to identify a blockage state. The calibrated value 290 may be a value generated by a calibration operation on machine 102, or by a calibration operation performed previously and stored as a default value, or in other ways. Change threshold value identification system 274 can process the signal output by torque/speed change detector 258 to determine a blockage state. For instance, the rate of change of the detected torque/characteristic may be compared to one or more of the characteristic change threshold values 234 to determine whether a blockage exists. FIG. 10 is a graph showing one example of this. In FIG. 10, the torque detected for a dispenser under analysis is output as a function of time. FIG. 10 shows that between 10 seconds and 20 seconds, the torque value drops significantly and abruptly and then increases significantly and abruptly between 20 seconds and 30 seconds, and again at approximately 40 seconds. These changes in the torque value can be compared against a change threshold value to identify a blockage state. For instance, the change between 10 and 20 seconds may indicate a full or partial blockage upstream of the dispenser, while the change between 20 and 30 seconds, and the change at approximately 40 seconds, may indicate a full or partial blockage downstream of the dispenser. The magnitude of the change over time can be compared against threshold values corresponding to the different blockage states to determine whether a blockage exists.

Whether the torque value or torque characteristic value output by torque characteristic generation system 222 is compared against a relative baseline generated from the torque value or torque characteristic value sensed on other dispensers by relative baseline generator 270, or whether the detected torque value or torque characteristic value is compared against a calibrated baseline by system 272, or whether the rate of change in the torque value or torque characteristic value or the rate of change in speed is compared against a threshold change value by system 274, comparison value generation system 264 generates an output indicative of the results of such comparison.

Blockage state output system 266 then generates blockage state indicator 280 which identifies the blockage state of the selected dispenser based upon the output from comparison value generation system 264. Control signal generator 228 generates control signal 282 based upon the blockage state indicator 280. Control signal 282 can be used to control the dispenser motors 194 based upon the blockage state. For instance, if a partial blockage is detected, then the control signal 282 may control the corresponding dispenser motor 194 to rotate more quickly to maintain a desired application rate, even though there is a partial blockage. The control signal 282 may control operator interface system 224 to generate an output on interface 200 for operator 202. The output may identify the blockage state, the dispenser, how long the blockage state has occurred, a tutorial indicating how to remedy the blockage state, the geographic location where the blockage state was present, and/or other information.

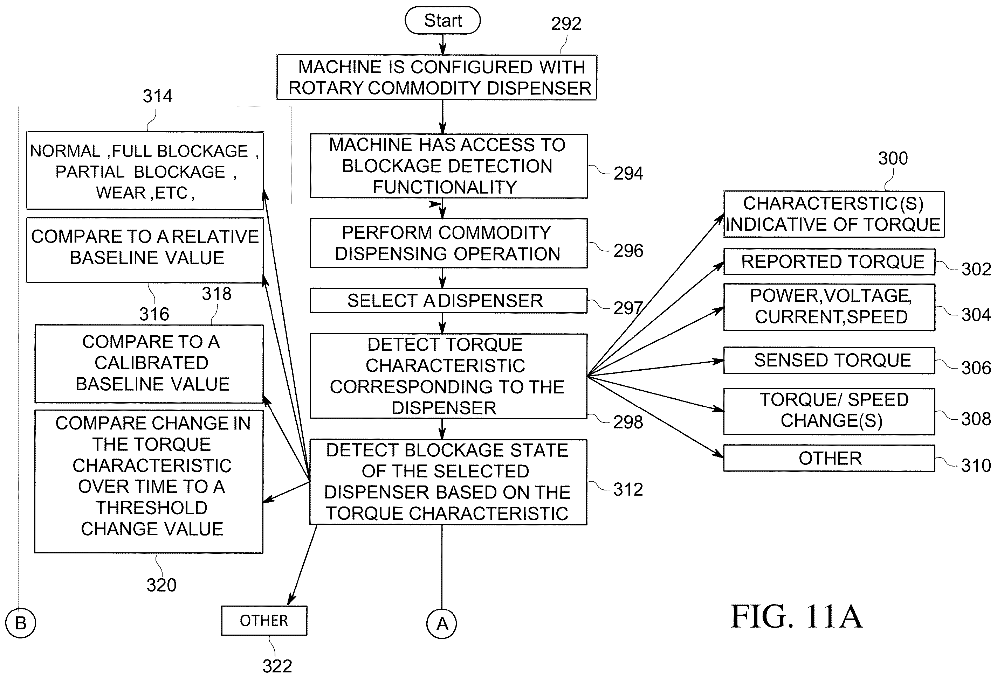

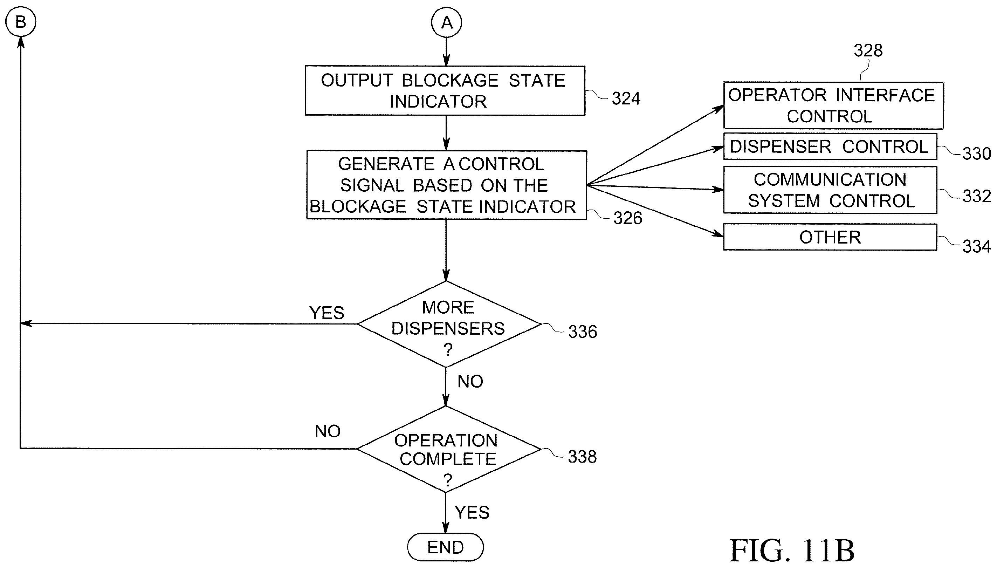

FIGS. 11A and 11B (collectively referred to herein as FIG. 11) show a flow diagram illustrating one example of the operation of blockage detection system 156 in generating blockage state indicator 280 and control signals 282. It is first assumed that the commodity dispensing machine (e.g., air seeder 102) is configured with a rotary commodity dispenser, as indicated by block 292 in the flow diagram of FIG. 11. It is also assumed that the machine includes or has access to blockage detection system 156, as indicated by block 294. The dispensing machine then performs a commodity dispensing operation, as indicated by block 296.

It will be appreciated that, in one example, the blockage state for multiple dispensers (or all dispensers) can be monitored in parallel. However, the present discussion will proceed with respect to the blockage state of the dispensers being monitored or detected sequentially, for the sake of example only. Therefore, dispenser selection system 262 then selects a dispenser for which a blockage state is to be detected. Selecting a dispenser is indicated by block 297 in the flow diagram of FIG. 11. Blockage detection system 156 then detects a torque characteristic (e.g., a torque value or torque characteristic value) corresponding to the selected dispenser.

Detecting the torque value or torque characteristic value is indicated by block 298 in the flow diagram of FIG. 11.

In one example, the detected value is a characteristic indicative of torque, as indicated by block 300. In another example, the dispenser motors 194 have components that detect and report out applied torque during operation of the dispenser motors 194. Therefore, the detected torque characteristic can be the reported torque value as indicated by block 302. In another example, the detected torque characteristic can be power, voltage, current, motor speed, etc., as indicated by block 304. The detected torque characteristic may be a sensed torque value 306, or a value quantifying the change or rate of change in the applied torque or motor speed as indicated by block 308.

As one example, one of the torque characteristic sensors 196 can sense a characteristic indicative of torque (or the torque itself) and provide a sensor signal to torque characteristic generation system 222. Torque characteristic generation system 222 can condition the sensor signal and, if the torque value is to be calculated, torque calculator 256 can calculate a torque value based upon the sensor signal. If the blockage state is to be identified based upon the change or rate of change in the detected torque or engine speed, then torque/speed detector 258 can detect the change or rate of change in the torque signal or the engine speed signal. The detected torque characteristic can be detected in other ways as well, as indicated by block 310. The torque characteristic generated by torque characteristic generation system 222 is then provided to blockage state detector 226 where the blockage state for the selected dispenser can be identified based upon the torque characteristic. Blockage state detector 226 then detects the blockage state corresponding to the selected dispenser based upon the torque characteristic, as indicated by block 312 in the flow diagram of FIG. 11. The blockage state can have values such as normal, full blockage, or partial blockage. The blockage state can include other information as well, such as the location where the blockage occurred, the length of time or area covered while the blockage existed, whether the blockage is a bridge blockage upstream of the dispenser or a blockage downstream of the dispenser, whether the blockage state indicates that the dispenser is exhibiting wear, or other conditions. Detecting these types of blockage states is indicated by block 314.

In one example, comparison value generation system 264 uses relative baseline generator 272 compare the torque or torque characteristic for the selected dispenser to the torque characteristic baseline value that is generated by the torque characteristics of the other dispensers on machine 102. Comparing the torque characteristic of the selected dispenser to a relative baseline value is indicated by block 316 in the flow diagram of FIG. 11.

In another example, calibrated baseline identification system 272 accesses the calibrated target torque/characteristic values 232 and blockage ranges 233 from data store 216 and compares the torque characteristic generated by torque characteristic generation system 222 to the calibrated baseline values as indicated by block 318 in the flow diagram of FIG. 11. In yet another example, change threshold value identification system 274 compares the change in the torque characteristic, or the rate of change of the torque characteristic, to characteristic change threshold values 234 to identify the blockage state, as indicated by block 320. The blockage state for the selected dispenser can be detected in other ways as well, as indicated by block 322. Based upon the output from comparison value generation system 264, blockage state output system 266 outputs the blockage state indicator 280 for the selected dispenser, as indicated by block 324. Blockage state indicator 280 can indicate whether there is a partial or full blockage, where that blockage may be located relative to the dispenser, as well as a wide variety of other information, such as the geographic location where the blockage occurred, the area over which the blockage was present, and/or any of a wide variety of other information.

Control signal generator 228 generates control signal 282 based upon the blockage state indicator 280, as indicated by block 326 and the flow diagram of FIG.11. Control signal 282 can be used to control operator interface system 224 to generate and interface 200 for operator 202, as indicated by block 328. Control signal 282 can be used to control the dispenser (e.g., to control dispenser motor 194) as indicated by block 330. The control signal 282 can be used to control communication system 218 to communicate the blockage state indicator and/or other information to other systems 212, other machines 210, etc., as indicated by block 332. Control signal 282 can be used in other ways as well, as indicated by block 334.

As long as the dispensing operation is not yet complete, as indicated by block 338, then processing reverts to block 296 where the dispensing operation is continued, and another dispenser is selected.

FIG. 12 is a flow diagram illustrating one example of the operation of calibration system 220 in performing a calibration operation. Calibration criteria detector 244 first detects calibration criteria to determine that a calibration operation is to be performed, as indicated by block 340. Such calibration criteria can indicate that the configuration of the dispenser has changed, as indicated by block 342 or that the commodity has changed, as indicated by block 344, or any of a wide variety of other calibration criteria, as indicated by block 346.

Speed selector 248 then selects a dispensing speed at which to calibrate the dispenser. Speed selector 248, or another component, can also select a commodity being dispensed as indicated by block 348. The agricultural machine is controlled to perform a dispensing operation at the selected speed, as indicated by block 350. The machine can be controlled by surfacing an interface 200 instructing operator 202 to perform a dispensing operation. The dispensing operation can be performed automatically or semi-automatically as well.

During the dispensing operation, blockage state verification system 246 verifies the blockage state which will be used for calibration, as indicated by block 352. For instance, if the dispenser is being calibrated to obtain a target torque or characteristic value for a normal or unblocked state, then blockage state verification system 246 verifies that the dispenser being calibrated is unblocked. Torque characteristic detection and storage system 250 then detects and stores the torque characteristic values (e.g., the torque values or the torque characteristic values 232, the average values, standard deviation, or other values 232) as indicated by block 354. Values 232 will thus identify the normal torque values or torque characteristic values generated during normal operation of the dispenser at the selected speed while dispensing the selected commodity.

If calibration system 220 is to calibrate the dispenser at another dispensing speed, as determined at block 356, then processing reverts to block 348 where another dispensing speed is selected. However, if, at block 356 it is determined that there are no more dispensing speeds to calibrate, then calibration system 220 performs any desired processing for blockage state detection, as indicated by block 358. For instance, calibration system 220 can compute actual torque values if a torque characteristic value was being used. Computing the torque values is indicated by block 360. Calibration system 220 can aggregate the detected torque characteristic values, such as by averaging them, filtering them, etc., as indicated by block 362. The calibration system 220 can also compute the variability in the torque value or torque characteristic value and save that variability as a characteristic change threshold value 234, as indicated by block 364. Calibration system 220 can perform any of a wide variety of other processing steps as well, as indicated by block 366.

Calibration system 220 then outputs the calibrated values for the dispenser as indicated by block 368. The calibrated values can be stored as values 232 and 234 locally on data store 216, or remotely on a remote data store, as indicated by block 370. The values can be sent to other systems 212 and/or other machines 210, as indicated by block 372. The calibrated values can be output in other ways as well, as indicated by block 374.

It can thus be seen that the present description describes a system that monitors the output of the dispenser drive motors that are used to drive the rotary dispensers in order to identify a blockage state corresponding to each dispenser. The dispenser drive motors can be monitored to identify applied torque or a characteristic indicative of applied torque, or a motor speed. The detected torque, characteristic, or speed can be compared against the relative baseline value, a calibrated baseline value, normal ranges, partial blockage ranges, and variability thresholds, to identify whether there is a full blockage or partial blockage and whether that blockage occurs upstream or downstream of the dispenser.

The present discussion has mentioned processors and servers. In one example, the processors and servers include computer processors with associated memory and timing circuitry, not separately shown. The processors and servers are functional parts of the systems or devices to which they belong and are activated by and facilitate the functionality of the other components or items in those systems.

Also, several user interface displays have been discussed. The displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, they can be actuated using touch gestures. Also, where the device that displays them has speech recognition components, they can be actuated using speech commands.

Several data stores have also been discussed. It will be noted the data stores can each be broken into multiple data stores. All can be local to the systems accessing them, all can be remote, or some can be local while others are remote. All of these configurations are contemplated herein. Also, the figures show a number of blocks with functionality ascribed to each block. It will be noted that fewer blocks can be used so the functionality is performed by fewer components. Also, more blocks can be used with functionality distributed among more components.

It will be noted that the above discussion has described a variety of different systems, components, generators, calculators, detectors, selectors, and/or logic. It will be appreciated that such systems, components generators, calculators, detectors, selectors, and/or logic can be comprised of hardware items (such as processors and associated memory, or other processing components, some of which are described below) that perform the functions associated with those systems, components, generators, calculators, detectors, selectors, and/or logic. In addition, the systems, components, generators, calculators, detectors, selectors, and/or logic can be comprised of software that is loaded into a memory and is subsequently executed by a processor or server, or other computing component, as described below. The systems, components, generators, calculators, detectors, selectors, and/or logic can also be comprised of different combinations of hardware, software, firmware, etc., some examples of which are described below. These are only some examples of different structures that can be used to form the systems, components, generators, calculators, detectors, selectors, and/or logic described above. Other structures can be used as well.

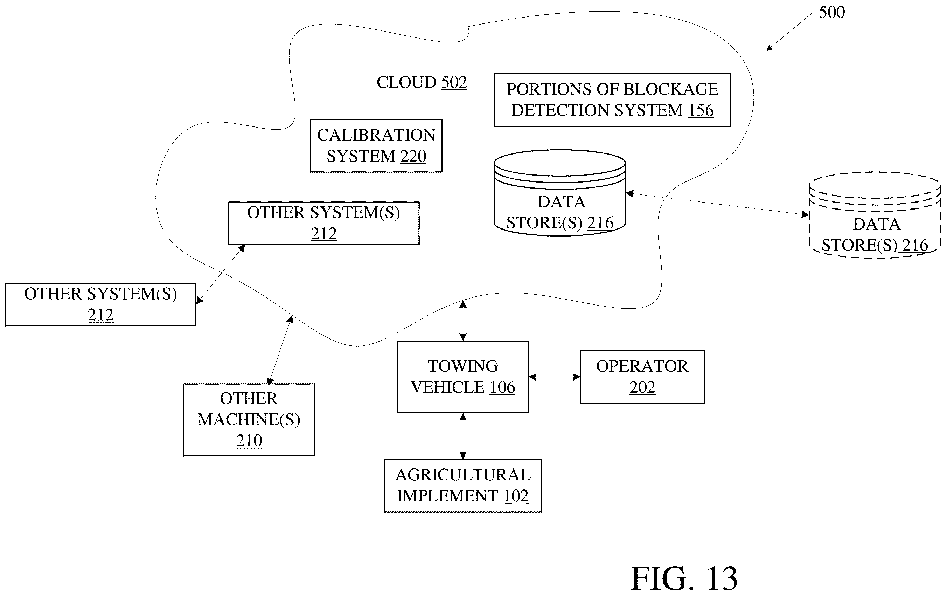

FIG. 13 is a block diagram of system 100, shown in other FIGS., except that system 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver services over a wide area network, such as the internet, using appropriate protocols. For instance, remote servers can deliver applications over a wide area network, and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, they can be provided from a conventional server, or they can be installed on client devices directly, or in other ways.

In the example shown in FIG. 13, some items are similar to those shown in previous FIGS. and they are similarly numbered. FIG. 13 specifically shows that portions of system 156 and data store 216, as well as other systems 212 can be located at a remote server location 502. Therefore, system 100 accesses those systems through remote server location 502. FIG. 13 also shows that other machines 504 can also communicate with the items in cloud 502 and with vehicle 106 through cloud 502.

FIG. 13 also depicts another example of a remote server architecture. FIG. 13 shows that it is also contemplated that some elements of previous FIGS are disposed at remote server location 502 while others are not. By way of example, data store 216 can be disposed at a location separate from location 502 and accessed through the remote server at location 502. Regardless of where the items are located, the items can be accessed directly by system 100, through a network (either a wide area network or a local area network), they can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the tractor comes close to the fuel truck for fueling, the system automatically collects the information from the tractor using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All these architectures are contemplated herein. Further, the information can be stored on the tractor until the tractor enters a covered location. The tractor itself can then send information to the main network.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

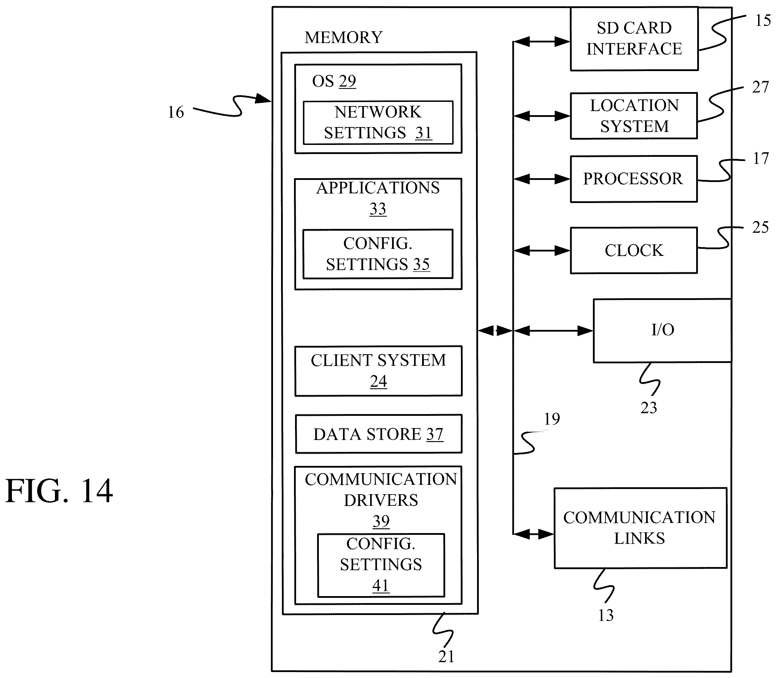

FIG. 14 is a simplified block diagram of one illustrative example of a handheld or mobile computing device that can be used as a user's or client's handheld device 16, in which the present system (or parts of it) can be deployed. For instance, a mobile device can be deployed in the operator compartment of tractor 106 for use in generating, processing, or displaying the dispenser blockage data. FIGS. 14-16 are examples of handheld or mobile devices.

FIG. 14 provides a general block diagram of the components of a client device 16 that can run some components shown in previous FIGS., that interact with them, or both. In device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. System 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

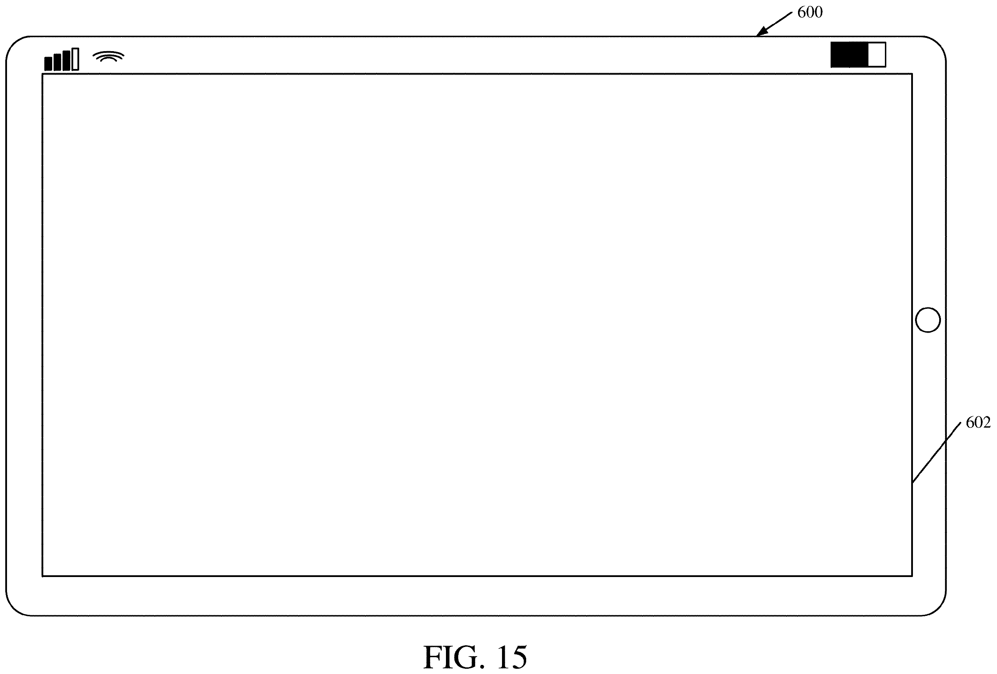

FIG. 15 shows one example in which device 16 is a tablet computer 600. In FIG. 15, computer 600 is shown with user interface display screen 602. Screen 602 can be a touch screen or a penenabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice input as well.

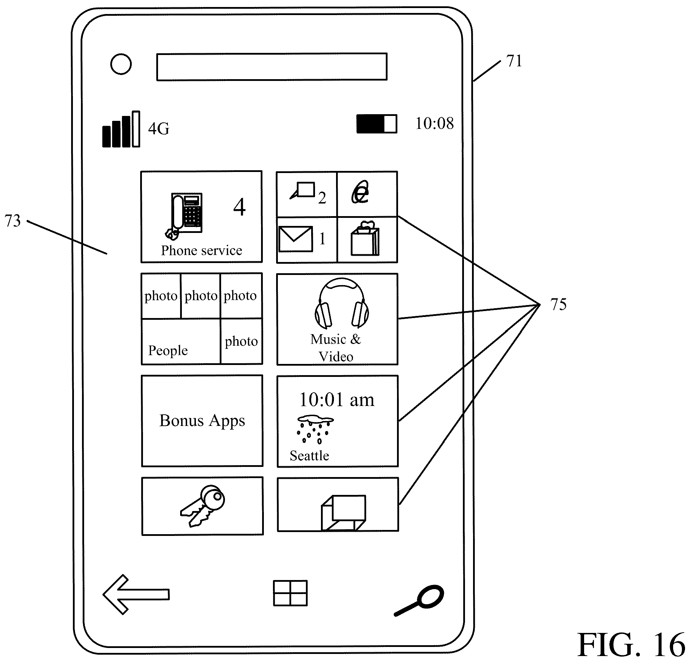

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

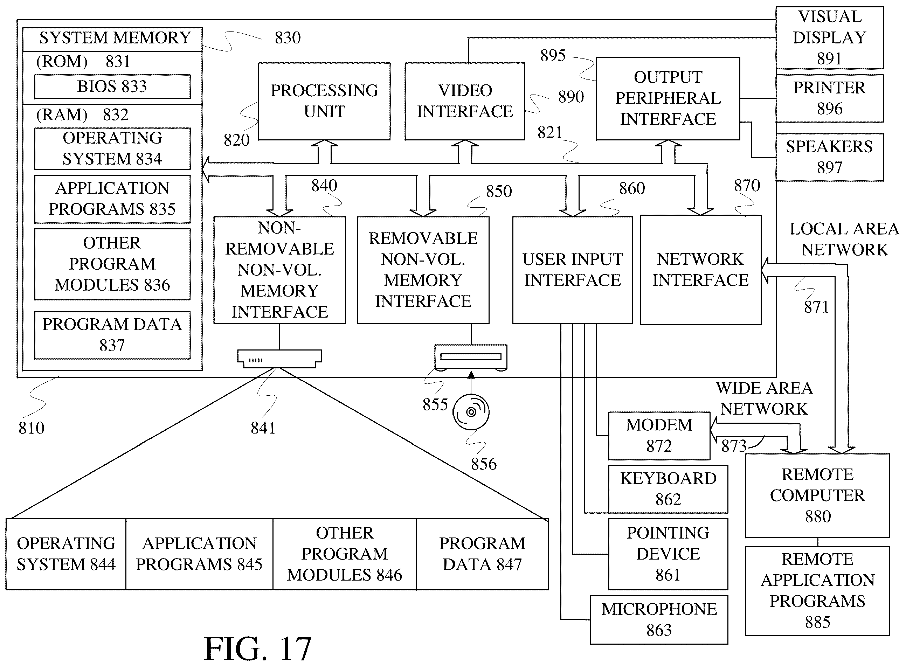

FIG. 17 is one example of a computing environment in which elements of previous FIGS., or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 17.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from and does not include a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information, and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

System memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 17 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 17 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural system (100), comprising:
a blockage state detector (226) configured to receive a first torque characteristic value indicative of torque applied by a first motor (194) to a first rotary dispenser (186) on an agricultural application machine (102) and compute a blockage state (280) corresponding to the first rotary dispenser (186) based on the first torque characteristic value; and
a control signal generator (228) configured to generate a control signal (282) based on the blockage state (280).

2. The agricultural system (100) of claim 1, wherein the agricultural application machine (102) comprises:
a plurality of additional rotary dispensers (186), each of the plurality of additional rotary dispensers (186) having a corresponding motor (194), the blockage state detector (226) configured to detect a plurality of additional torque characteristic values, each of the plurality of additional torque characteristic values corresponding to a different one of the motors; and
wherein the blockage state detector (226) comprises a relative baseline generator configured to identify a relative baseline torque characteristic value based on the plurality of additional torque characteristic values.

3. The agricultural system (100) of claim 2, wherein the relative baseline generator is configured to compare the first torque characteristic value to the relative baseline torque characteristic value to obtain a comparison result and identify the blockage state (280) based on the comparison result.

4. A computer implemented method, comprising an agricultural system (100) of one of the claims 1 to 3, the computer implemented method further comprising:
detecting (298) a first torque characteristic value indicative of torque applied by the first motor (194) to the first rotary dispenser (186) on the agricultural application machine (102);
computing (312) the blockage state (280) corresponding to the first rotary dispenser (186) based on the first torque characteristic value; and
generating (326) the control signal based on the blockage state (280).

5. The computer implemented method of claim 4, wherein the agricultural application machine (102) comprises a plurality of additional rotary dispensers (186), each of the plurality of additional rotary dispensers (186) having a corresponding motor (194), wherein computing (312) the blockage state (280) comprises:
detecting a plurality of additional torque characteristic values, each of the plurality of additional torque characteristic values corresponding to a different one of the motors (194); and
identifying a relative baseline torque characteristic value based on the plurality of additional torque characteristic values.

6. The computer implemented method of claim 4 or 5, wherein computing (312) the blockage state (280) comprises:
comparing the first torque characteristic value to the relative baseline torque characteristic value to obtain a comparison result; and
identifying the blockage state (280) based on the comparison result.

7. The computer implemented method of one of the claims 4 to 6, wherein computing (312) the blockage state (280) comprises:
performing a calibration operation to identify a calibrated baseline torque characteristic value;
comparing the first torque characteristic value to the calibrated baseline torque characteristic value to obtain a comparison result; and
identifying the blockage state (280) based on the comparison result.

8. The computer implemented method of one of the claims 4 to 7, wherein computing the blockage state (280) comprises:
identifying a first torque characteristic variation value indicative of a variation in the first torque characteristic value over time;
comparing the first torque characteristic variation value to a baseline torque characteristic variation value to obtain a comparison result; and
identifying the blockage state (280) based on the comparison result.

9. The computer implemented method of one of the claims 4 to 8, wherein detecting a first torque characteristic value comprises:
detecting a first speed value indicative of a speed of rotation of an output of the first motor (194), wherein computing the blockage state (280) comprises computing the blockage state (280) based on the first speed value.

10. The computer implemented method of one of the claims 4 to 9, wherein the agricultural application machine (102) comprises a material reservoir, a tool, a first delivery conduit between the material reservoir and the rotary dispenser (186), and a second delivery conduit between the rotary dispenser (186) and the tool and wherein computing the blockage state (280) comprises:
determining whether a material blockage is present based on the first torque characteristic value; and
determining whether the blockage is in the first conduit or the second conduit based on the first torque characteristic value.

11. The computer implemented method of one of the claims 4 to 10, wherein determining whether a material blockage is present comprises:
determining whether the material blockage is a partial blockage or a total blockage based on the first torque characteristic value.

12. The computer implemented method of one of the claims 4 to 11, wherein generating the control signal (282) comprises:
generating a blockage state indicator indicative of the blockage state (280); and
generating the control signal (282) based on the blockage state indicator.

13. The computer implemented method of claim 12, wherein generating the blockage state indicator comprises:
generating a dispenser identifier identifying the rotary dispenser (186) to which the blockage state (280) corresponds;
generating a blockage type indicator indicative of a type of blockage; and
generating a blockage location indicator indicative of a location of the blockage relative to the rotary dispenser (186).

14. The computer implemented method of claim 12 or 13, wherein generating the control signal (282) comprises:
generating the control signal (282) to control a user interface to output the blockage state indicator.

15. The computer implemented method of one of the claims 4 to 14, wherein generating the control signal (282) comprises:
generating a rotary dispenser control signal to control the rotary dispenser (186) based on the blockage state (280).
